(19) Europäisches Patentamt

European Patent Office

Office européen des brevets

(11) **EP 2 799 908 B1**

(12) **EUROPEAN PATENT SPECIFICATION**

(45) Date of publication and mention
of the grant of the patent:
**30.01.2019 Bulletin 2019/05**

(21) Application number: **14166677.6**

(22) Date of filing: **30.04.2014**

(51) Int Cl.:
**G01S 19/25** *(2010.01)*    **G01S 19/30** *(2010.01)*

(54) **A device and methods for processing encrypted navigation signals**

Vorrichtung und Verfahren zur Verarbeitung verschlüsselter Navigationssignale

Dispositif et procédés de traitement de signaux de navigation chiffrée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.04.2013 GB 201307735**

(43) Date of publication of application:
**05.11.2014 Bulletin 2014/45**

(73) Proprietor: **Nottingham Scientific Limited
Riverside Business Park
Nottingham, Nottinghamshire NG2 1RT (GB)**

(72) Inventors:
• **Wales, Ben Peter**
**Nottingham,**
**Nottinghamshire NG2 1RT (GB)**

• **Aguado, Luis Enrique**
**Nottingham,**
**Nottinghamshire NG2 1RT (GB)**

(74) Representative: **Abel & Imray
Westpoint Building
James Street West
Bath BA1 2DA (GB)**

(56) References cited:
**EP-A1- 2 746 810    EP-A1- 2 770 340
US-A- 5 825 887    US-A- 6 031 488
US-B2- 6 856 282**

**Description**

This invention relates to a device and methods for processing encrypted navigation signals, such as GNSS signals.

Global Navigation Satellite Systems ("GNSS") may be used as a navigation system for providing position, velocity and timing information for a wide variety of applications. Examples of GNSS are GPS, GLONASS, GALILEO and BEIDOU. Currently, only GPS and GLONASS are global systems, but GALILEO and BEIDOU are being developed as future global GNSS systems.

These GNSS systems are typically developed with civilian and non-civilian (such as military) aspects. For example, GPS includes a Coarse Acquisition code for civilian use, which may be received and processed by all compatible receivers to produce position information. The most notable applications for civilian use are on mobile phones and in-vehicle guidance (satellite navigation) systems.

Navigation systems operate by broadcasting a plurality of timing signals. A user is equipped with a suitable receiver including an RF antenna for receiving the timing signals. In GNSS, a GNSS receiver includes a processor that internally generates local replicas of spreading codes broadcast by the satellites, referenced to an internal clock. These signals are presented in a defined format and are specified in open literature (e.g. GPS SPS ICD, GLONASS ICD, GALILEO OS ICD, BEIDOU ICD). The processor correlates the internal replica signals with the received signals from the satellites, and uses the results of the correlation process to determine the ranging measurement from the GNSS receiver to a satellite that broadcast each signal.

The GNSS receiver also decodes the navigation message in the received signals that enables the GNSS receiver to determine the location information (e.g. orbit and clock information) for each satellite. The navigation message is also presented in a defined format which is specified in open literature (e.g. GPS SPS ICD, GLONASS ICD, GALILEO OS ICD, BEIDOU ICD). The ranging measurements are combined with the location information for each satellite to calculate a position for the GNSS receiver.

As noted above, GNSS systems are also developed with a non-civilian aspect. For example, GPS includes P(Y) code for non-civilian (e.g. military) use. In the non-civilian aspect, restricted access (encrypted) signals are used, which are broadcast in a pre-defined format but the contents are not publicly available. For the remainder of this specification, the term "encrypted" shall be used to describe all restricted access forms of GNSS systems.

For an encrypted GNSS signal, the satellite system is responsible for encrypting the signals prior to transmission. GNSS receivers must therefore have the capability of operating with the encrypted signals in order to process the content to calculate its position. The conventional approach is to provide a security module on the GNSS receiver to generate the local replicas of the encrypted signals. The security module includes the cryptographic algorithms that generate the local replicas and decrypt the navigation messages containing the location information for each satellite.

The security module requires a 'key' in order to be able to generate the local replicas of the spreading codes and to decrypt the secure navigation messages. A GNSS receiver may be provided with a key either manually or autonomously (using techniques such as over-the-air rekeying (OTAR)).

To ensure that the non-civilian aspect of a GNSS system is used only by government authorised entities, the distribution of the keys and cryptographic algorithms are closely monitored and each GNSS receiver requires its own security module. The protection of the keys, cryptographic algorithms and security modules therefore impose a significant operational overhead on any system or application that uses the encrypted aspect of the GNSS system. Many potential users are currently unable to manage these keys and cryptographic algorithms and/or unable to justify the additional cost of procuring and operating GNSS receivers that incorporate the security modules. The applications and markets for encrypted GNSS signals could be increased if there was a way to reduce the operational overhead.

Document US 5,825,887 discloses a transmitting and receiving apparatus, comprising a central station and a delayed correlation receiver. The central station receives encrypted signals and extracts the encrypted information, and transmits it to the delayed correlation receiver, which performs the correlation with the encrypted information received.

Document US 6,031,488 discloses a system for processing a PPS (precise positioning service) signal from a satellite to obtain positioning information, comprising a first and second GPS receiver. The first GPS receiver is adapted to process the PPS signal and to output CVas (Crypto Variable Anti Spoofing) and SA correction information. The second GPS receiver is adapted to receive the CVas and SA correction information from the first GPS receiver, and to process the PPS signal using the received CVas and SA correction information.

It is therefore desirable to alleviate some or all of the above problems.

According to a first aspect of the invention, there is provided a device according to claim 1, comprising a communications interface configured to receive encrypted GNSS signals from a plurality of satellites and configured to receive a replica spreading code from an external source; and a processor for calculating a position based on the encrypted GNSS signal and the replica spreading code.

The present invention therefore provides a device (such as a stand-alone GNSS receiver or a combination of field terminal and processing server) which may calculate its position based on an encrypted GNSS signal without having a security module or other restricted elements. An external source may include the security module (or alternative means) and produce an assistance message (including the relevant information for the GNSS receiver to process the encrypted GNSS signals), and send this to the device. On receipt, the device may process the encrypted GNSS signal and assistance message to produce a position fix.

This arrangement significantly reduces the cost associated with allocating security modules to each GNSS device and the operational load of managing keys and cryptographic algorithms for each user. At the same time, this arrangement still benefits from the same security level offered by the conventional encrypted GNSS receiver, as the device may be configured to receive the assistance messages over a secure communications link. Accordingly, the assistance messages remain secret to unauthorized entities and the control and distribution of access to the encrypted part of a GNSS system remains intact.

The replica spreading code may be a replica of multiple spreading codes (e.g. a composite of spreading codes from a plurality of satellites). In this case, the processor may be configured to detect a plurality of observed satellite spreading codes present in both the encrypted GNSS signal and the replica of multiple spreading codes by means of a correlation or equivalent technique, and may be configured to identify a satellite associated with each correlation match in the plurality of correlation matches observed when correlating against a replica of multiple spreading codes using navigation information (e.g. received via the communications interface).

The device may therefore be configured to receive a replica of multiple spreading codes (such as a composite of multiple spreading codes for multiple satellites as described in the Astrium PROSPA system, as described in 'PROSPA: Open Service Authentication', which may be found at http://m.ion.org/abstract.cfm?paperID=244). In this case, any correlation match between the encrypted GNSS signal and the replica of multiple spreading codes (i.e. a spreading code that is present in both the encrypted GNSS signal and the replica of multiple spreading codes) is unidentified. That is, the correlation match is not attributed to a satellite identifier. There may also be false correlation detection events introduced by signal noise or other effects. The device may therefore use navigation information (e.g. received at the communications interface from the external source) to identify the satellite identifier for the correlation match.

Furthermore, the navigation information may relate to a plurality of potential satellites each having a satellite identifier, and the processor may be configured to calculate a pseudorange for each potential satellite for each correlation match and may allocate a satellite identifier to the satellite associated with each correlation match in the plurality of correlation matches based on the pseudorange and navigation information. The processor may be configured to perform a position computation (e.g. using a least-squares computation) for each potential mapping of satellite identifier to each correlation match. The device may therefore use a 'brute force' technique to allocate satellite identifiers by selecting the mapping with best fit between the observations and the computed position.

Once the processor has identified the satellites associated with each correlation match (and therefore the identity of each satellite that transmitted the spreading code in the encrypted GNSS signal and replica of multiple spreading codes), the device may then calculate a position fix.

A potential satellite from the plurality of potential satellites may be omitted from the position computation (e.g. least-squares computation). This may be, for example, by removing unobservable satellites for the device's approximate location. This reduces the number of calculations required in the position computation. Additionally, it is possible to remove specific mapping combinations that are not expected due to the satellite orbits. Another method to reduce the number of combinations evaluated is to exclude some of the observations considered. For example, as only five satellites are required for an over determined solution, all but five observations could be discarded.

Alternatively, the processor may identify a satellite associated with each correlation match by being configured to calculate an expected observable for each satellite in the plurality of potential satellites using the navigation information, populate a set of expected relative values, wherein each expected relative value is the difference between the expected observables for each pair of satellites in the plurality of potential satellites, calculate an observable for each correlation match in the plurality of correlation matches, populate a second set of observed relative values, wherein each observed relative value is the difference between the measured observables for each pair of potential satellites in the plurality of correlation matches, and allocate a satellite identifier to the satellite associated with each correlation match based on the correspondence between an expected relative value and the observed relative value. This process will at the same time remove most false detection events introduced by signal noise or other effects.

This alternative technique exploits a pattern between observed and predicted values (such as pseudoranges and/or Doppler shift values) across the plurality of potential satellites. There is a (potentially large) common bias on both the pseudoranges and the Doppler shifts due to the GNSS receiver clock error with respect to the system time. However, the relative pseudoranges and relative Doppler shifts between pairs of satellites should be the same as the relative observed pseudoranges and relative observed Doppler shifts (apart from small errors resulting from approximate position, user dynamics and time estimation error). Accordingly, this alternative technique allocates a satellite identifier to a satellite associated with each correlation match based on the correspondence between an expected relative value (calculated from the plurality of potential satellites using the navigation information, which includes the satellites identifiers) and an observed relative value (calculated from the plurality of correlation matches).

The processor may be configured to allocate a satellite identifier to the satellite associated with each correlation match based on the correspondence between an expected relative value and the observed relative value if a criterion is met. The criterion may be met if a first difference between the expected relative value and the observed relative value is below a first predetermined threshold, and/or if a second difference between the expected relative value and any second expected relative value is above a second predetermined threshold. The thresholds may be based on an error bound of the predicted (and measured) observations. This in turn may be based on the error bound of the position and/or time estimate. The thresholds can automatically adapt to improved quality inputs (e.g. the approximate position estimate will be greatly improved after the initial position fix has been computed).

The expected observable and the measured observable may relate to a pseudorange or a Doppler shift. Alternatively, the expected observable and measured observable relate to a combination of the pseudorange and the Doppler shift (such as a complex combination of the two), which provides improved results.

The device may be a GNSS receiver, such as a GPS receiver or GALILEO receiver. Alternatively, the device could be connected to a host (such as a smart phone). The processing and/or data storage could be performed either on the device itself, on the host it is attached to, or on a remote server.

According to a second aspect of the invention, there is provided a method of identifying a satellite associated with a correlation match, the correlation match produced when a satellite spreading code is present in both an encrypted GNSS spreading code and a replica of multiple GNSS spreading codes, the method comprising the steps of: receiving navigation information relating to a plurality of potential satellites, wherein each potential satellite in the plurality of potential satellites includes a satellite identifier; calculating a pseudorange for each potential satellite for each correlation match; and allocating the satellite identifier to the satellite associated with the each correlation match based on the pseudorange and navigation information.

According to a third aspect of the invention, there is provided a method of identifying a satellite associated with a correlation match, the correlation match produced when a satellite spreading code is present in both an encrypted GNSS spreading signal and a replica of multiple GNSS spreading signals, the method comprising the steps of: receiving navigation information relating to a plurality of potential satellites from an external source, wherein each potential satellite in the plurality of potential satellites includes a satellite identifier; calculating an expected observable for each satellite in the plurality of potential satellites using the navigation information; populating a set of expected relative values, wherein each expected relative value is the difference between the expected observables for each pair of satellites in the plurality of potential satellites; calculating an observable for each correlation match in the plurality of correlation matches; populating a second set of observed relative values, wherein each observed relative value is the difference between the measured observables for each pair of satellites in the plurality of correlation matches; and allocating a satellite identifier to the satellite associated with each correlation match based on the correspondence between an expected relative value and the observed relative value.

Furthermore, a computer program embodied on a computer readable medium may contain instructions which when executed on a computer are configured to perform the method of the second or third aspect of the invention. Embodiments of the invention will now be described, by way of example, and with reference to the drawings in which:

> Figure 1 is a schematic overview of a device according to an embodiment of the present invention, receiving an encrypted GNSS signal from a space vehicle and an assistance message from an external source;
> Figure 2 is a schematic overview of the device of Figure 1;
> Figure 3 is a flow diagram illustrating an embodiment of a first method of the present invention; and
> Figure 4 is a flow diagram illustrating an embodiment of a second method of the present invention.

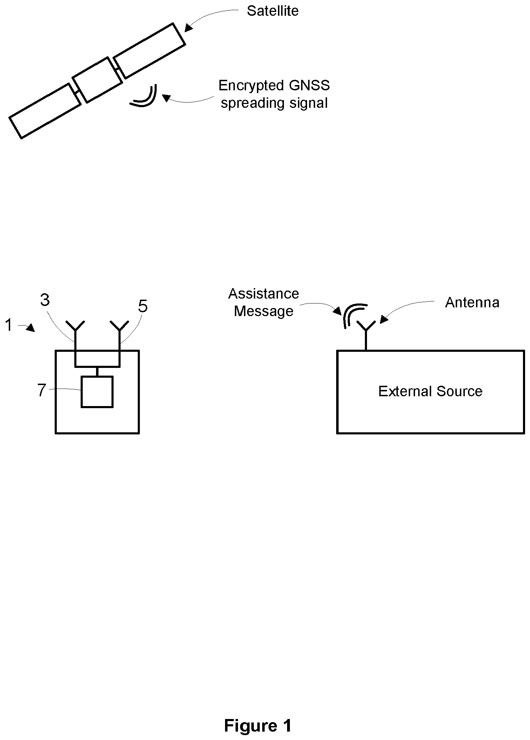

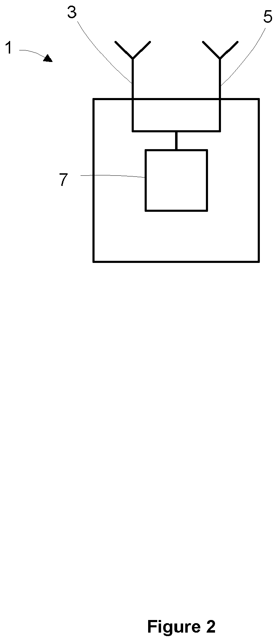

An embodiment of a GNSS receiver 1 of the invention will now be described with reference to Figures 1 to 2. A space vehicle, such as a GNSS satellite, broadcasts a GNSS spreading code. The GNSS spreading code is encrypted (and shall be referred to as the "encrypted GNSS spreading code" for the remainder of this description). The encrypted GNSS spreading code may be a P(Y) code signal in GPS.

A GNSS receiver 1 of the present invention is shown in Figure 1. The GNSS receiver 1 includes a first RF antenna 3 for receiving the encrypted GNSS spreading code from the space vehicle. In this embodiment, the GNSS receiver 1 does not include a security module and therefore cannot generate itself a local replica code to process the encrypted GNSS spreading code to produce a position fix. The skilled person will understand that the term 'position fix' means to determine a position and/or velocity and/or time of the GNSS receiver based on the information contained in the encrypted GNSS spreading code.

The GNSS receiver 1 includes a second antenna 5. The first and second antennas 3, 5 could be realised as a single common antenna, although other communication interfaces are possible. The second antenna 5 is for receiving an assistance message from an external source. The assistance message (which will be described in more detail below) is generated by an external source having the required security module, keys and/or cryptographic algorithms or by other means (directly from the satellite broadcasts, ground segment, a database, etc), and includes relevant information for the GNSS receiver to process the encrypted GNSS spreading code. Accordingly, the GNSS receiver 1 also includes a processor 7, which is configured to use the assistance message to process the encrypted GNSS spreading to produce a position fix.

An assistance message will now be described in more detail. The assistance message includes satellite code information (such as a replica of the spreading code). In this embodiment, the assistance message includes satellite code information for all satellites in view for a defined period of time (e.g. the period of time the GNSS receiver 1 was receiving the encrypted GNSS spreading code). The satellite code information may be received in the form of a single code sequence including a replica of the spreading codes for a plurality of satellites overlaid together (for example, as produced by the Astrium 'Snippets' system).

In this embodiment, the assistance message also includes navigation information for all the satellites, such as the location information contained in a conventional navigation message. This part of the assistance message (such as satellite orbit and clock information) may be obtained from the satellite system, ground control, independent third party providers, extracted from the unencrypted satellite signals using a conventional receiver device, or could also be included within the secure signals which could be provided by the system. Old orbit and clock data could also be propagated by the device.

For the remainder of this description, the satellite code information part of the assistance message shall be referred to as the "code assistance message", and the navigation information part of the assistance message shall be referred to as the "navigation assistance message".

As shown in Figure 1, the assistance message is sent from the external source to the GNSS receiver 1. Accordingly, the external source has (or has access to) the security module, keys and/or cryptographic information required to acquire the information in the code and navigation assistance messages.

The processor 7 is configured to use the code and navigation assistance messages to process the encrypted GNSS spreading codes and calculate a position for the GNSS receiver 1. To process the encrypted GNSS spreading codes, the processor 7 is adapted to identify each satellite that transmitted each encrypted GNSS spreading code. Once identified, the location information (contained in the navigation assistance message) may be used to calculate a position fix.

In this embodiment, the GNSS receiver 1 receives a code assistance message including a replica of multiple GNSS spreading codes (i.e. a composite signal including GNSS spreading codes from a plurality of satellites). The identity of each satellite associated with each GNSS spreading code in the replica is unknown. The processor 7 may use one of the following methods to identify the satellite associated with each GNSS spreading code.

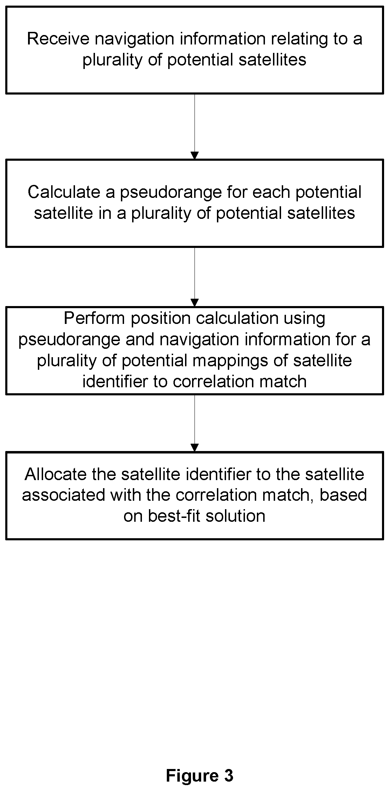

A first method for identifying a satellite associated with a GNSS spreading code in a replica of multiple GNSS spreading codes will now be described with reference to Figure 3.

A correlation match is recorded by the processor 7 whenever the result of a correlation process between the encrypted GNSS signal and the replica of multiple GNSS spreading codes exceeds a detection threshold. Multiple correlation matches may be detected simultaneously corresponding to the different relative delays and frequency offsets between the received signal and local replica for the spreading codes of the satellites in view. Additional undesired correlation matches may be introduced by signal noise or other undesired effects.

There is no corresponding satellite identifier for the correlation match and the identity of the satellite associated with each observed correlation match is unknown. The location information of satellites (which may contain a satellite identifier and its corresponding orbit and clock information) contained in the navigation assistance message and a least-squares computation may therefore be used to allocate the satellite code identifier with each satellite associated with each observed spreading code.

The navigation assistance message includes the location information for all potential satellites for the approximate position of the receiver 1. The processor 7 produces pseudoranges between the GNSS receiver 1 and each potential satellite associated with each observed correlation match using the transmission and reception times. The processor 7 then performs a position computation for each potential mapping of satellite identifier to observed correlation match. In this embodiment, the position computation is an over-determined least-squares computation.

As the solutions are over determined (more observations than unknowns), the quality of fit may be established using the residuals of the least-squares computation. The best-fit solution is thus selected and its associated mapping used to allocate the satellite code identifiers to each satellite associated with each observed satellite correlation match.

The skilled person will understand that the number of permutations and therefore computations increases as the number of potential satellites increases and/or the number of correlation matches increases. However, geometric dependencies between satellites and the approximate position of the GNSS receiver 1 may be exploited to reduce the search space (e.g. excluding sets with antipodal satellites) and eliminate unobservable satellite combinations.

In the above method, the GNSS receiver 1 may optionally use an approximate position from the navigation assistance message. However, the skilled person will understand that the approximate position may be provided by other means, such as a previous location fix or information extracted from the communications link or other sources.

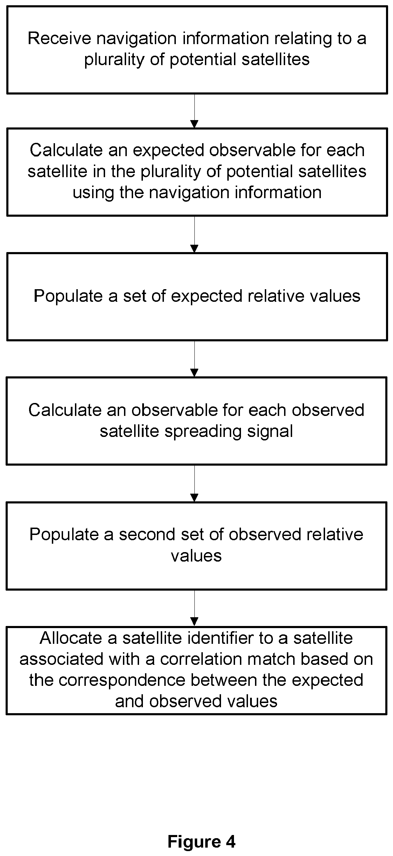

A second method for identifying a satellite associated with a GNSS spreading code in a replica of multiple GNSS spreading codes will now be described with reference to Figure 4.

In a first step, a 'reference value' for each possible satellite is produced using an approximate position of the GNSS receiver 1. The reference value may be a pseudorange, a Doppler shift, or a combination of the two (this is discussed more, below). Potentially, the approximate velocity of the receiver could also be used in a dynamic scenario. The approximate position may be contained in the navigation assistance message (or derived by other means, such as previous location fix or information extracted from the communications link).

In a second step, the differences between all pairs of reference values are computed to produce a set of 'reference relative values'. The differences between a pair of satellites are treated independently in each direction (i.e. each combination results in two reference relative values with opposite signs).

In a third step, the magnitude of the difference to the nearest other reference relative value is calculated to produce a 'separation level'.

A correlation match is recorded by the processor 7 whenever the result of a correlation process between the encrypted GNSS signal and the replica of multiple GNSS spreading codes exceeds a detection threshold.

In a fourth step, 'observed values' are calculated from the correlation matches. The observed values relate to the same observable as used for the reference values in the first step. The differences between all pairs of observed values are computed to produce an 'observed relative value'. In this step, the differences between two observations should only result in a single relative observed value. The corresponding reference relative value will already have been created for both directions.

The observed relative values are then mapped to the reference relative values in a fifth step. In this step, a closest reference value is found for each observed relative value and the magnitude of the difference between the two values (their 'match error') is computed. In this embodiment, a mapping between the observed relative value and its closest reference value is created if the following conditions are true: (1) their match error is below a first predetermined threshold, (2) the separation level of the reference relative value is above a second predetermined threshold, and (3) any existing mapping of the reference relative value has a greater match error (in which case, the previous mapping is discarded).

Step five therefore produces a mapping between the observed relative values and a set of the reference relative values (the set of reference relative values meeting certain conditions).

In a sixth step, any reference relative value which has not been matched to an observed relative value can be discarded. The remaining reference relative values are sorted in ascending order of their match error to produce 'sorted matched reference relative values'.

In a seventh step, the sorted matched reference relative values are processed in turn to allocate the satellite identifiers to each satellite associated with an observed correlation match. Each reference relative value has two satellite identifiers associated with it (sourced from the navigation assistance message). Likewise, each observed relative value has two observation identifiers associated with it. Each matched pair of relative values therefore has a pair of potential mappings of observation identifier and satellite identifier (i.e. observation identifier one to satellite identifier one and observation identifier two to satellite identifier two). The overall mapping between observation identifier and satellite identifier can be found by processing the list of sorted matched reference relative values as follows:

- If either of the two associated observation identifier to satellite identifier mappings disagrees with a previous mapping (e.g. the satellite identifier has previously been mapped to another observation identifier) then the entire reference relative value is discarded and no information is used;
- If there is no contradiction then the mapping between these two observation and satellite pairs can be established.

The matching stops when there are no unmatched observations involved in the remaining relative values.

The above method therefore identifies the satellites and allocates a satellite identifier for each satellite associated with an observed correlation match.

In a last step, any incorrectly mapped satellites can be detected by a simple check of the observed reference values minus the mapped reference values. This results in a set of errors containing the receiver clock bias. The median of these values can be taken as a rough approximation and removed from them all. The resulting values can then be checked against a configured threshold. This threshold can be directly related to the expected accuracy of the approximate position used (and time stamp, orbit accuracy and error modelling).

In the above method, tests are used to ensure the correct mapping between the expected value and observed value. The first threshold (relating to the match error) is used to deal with measurements that have no corresponding predictions (e.g. satellites without valid ephemeris data or the results of false acquisitions). To counter a situation in which a false acquisition is matched to an unobserved reference satellite, a bound on how close a match must be is imposed. The second threshold (i.e. relating to the separation level) is used to prevent matching the wrong relative value when the true error exceeds the separation distance. This value may be approximately double the upper bound of the expected approximate position error.

The final outlier detection threshold should be determined by the upper bound on the error of the approximate position. It will also be affected, to a lesser extent, by the time stamp accuracy, ephemeris accuracy and the atmospheric modelling accuracy.

There is a relationship between these three thresholds and the upper bound of the approximate position error:

Minimum Separation Threshold / 2 = Maximum Observation Error = Outlier Threshold = Position Error Limit

When using complex data representing both the pseudorange and scaled Doppler shift values it is necessary to increase this threshold slightly. In this case, the relationship becomes:

Minimum Separation Threshold / 2 = Maximum Observation Error = Outlier Threshold = Position Error Limit * sqrt(2)

As the algorithm is parameterised by the combined quality of the predicted and observed pseudorange and Doppler shift observations (i.e. by the upper bound of their accuracies), it will automatically adapt to improving quality inputs. For example, when starting with a very coarse position estimate (e.g. the location of the communications tower used) it may have lower than normal availability due to inability to accurately distinguish between different pairs of potential satellites. Once the system is operating the previous position can be used as the position estimate. This will have a lower error bound and therefore the availability will increase due to the increase accuracy and ability to distinguish between different pairs of satellites.

In the second method, the expected and observed pseudoranges are calculated. However, the skilled person will realise that other observables (such as Doppler shift) may be used. Furthermore, both the pseudorange and Doppler shift may be used simultaneously in the above method. That is, a complex number may be used to represent both observables (e.g. the pseudorange being the real component and the Doppler shift being the imaginary component). This produces more accurate results. In this arrangement, the Doppler shift values may be scaled to have an equivalent weighting to the pseudorange measurements. This may be achieved by scaling the Doppler shift values so that the expected error bound on the predicted values are equal to that of the predicted pseudorange values.

Thus, the first and second methods detailed above both identify the satellites associated with observed correlation matches. The received encrypted GNSS signals may then be processed by the processor 7, together with the replica of multiple GNSS spreading codes, to produce a position fix in the conventional manner.

In the description above, the replica of the spreading code from the external source is a replica of multiple spreading codes (i.e. a composite of spreading codes from multiple satellites). However, the skilled person will understand that the replica of the spreading code may relate to a single satellite and therefore the identity of the satellite is already known. In this case, as the identity of each satellite in the encrypted GNSS code and replica of the spreading code is known, the processor may calculate the GNSS receiver's position based on the encrypted GNSS signal, replica spreading code and navigation information in the conventional manner.

In the above embodiment, the GNSS receiver includes an antenna and a radio communications interface for receiving a replica spreading code and navigation information. The skilled person will understand that this is preferably over a secure communications link. However, the skilled person will understand that this is non-essential for the performance of the invention. Furthermore, the skilled person will understand that this antenna and radio communications interface may be replaced with any suitable form of communications interface, such as a wired link. Furthermore, the communication of assistance messages and/or the positioning operation may be performed in near real-time or deferred to a later time.

The navigation assistance message may include precise time reference. However, many existing and planned communications networks will provide a precise time reference. The receiver device requires a precise time to reference the capturing of the encrypted GNSS signals. Alternatively, the GNSS receiver may use a precise local clock or an external timing service to provide the timing information.

Furthermore, the navigation assistance message could include information on the approximate position of the GNSS receiver (which may be at coarse level). Alternatively, the information could be provided from an approximate location of the intended operation, a previous location fix, information extracted from the communications link or other sources. Many existing and planned communications systems can provide an approximate location of the user device (using a variety of techniques).

The code assistance message and navigation assistance message may be broadcast from the same external source or separate external sources. The broadcasting interval could be the same or different for the code and navigation assistance messages. Preferably, the code assistance message is broadcast at a frequency commensurate with the application (e.g. every second, six seconds, thirty seconds, etc). Typically, the code assistance message is required for each time period and will be different for each broadcast. However, the navigation assistance message may remain valid for longer periods but is preferably constantly transmitted to ensure that new GNSS receivers joining the network can access the message. If using a connection based communications approach, the navigation assistance data can be transmitted when the connection is established thereby reducing the requirement on the update interval. In the case of satellite navigation, GNSS receivers only need to update their navigation assistance message every one to two hours. This depends on the parameterisation of the orbital parameters and desired navigation performance.

The skilled person will understand that the device may be a GNSS receiver, such as a GPS receiver or GALILEO receiver. Furthermore, the device may be connected to an existing host (such as a smart phone, tablet etc.). The processing and/or data storage could be performed either on the device itself, on the host it is attached to, or on a separate device or server.

In the above embodiments, particular methods of signal detection, signal processing and positioning algorithms are used. However, the skilled person will understand that the invention is not limited to the particular signal detection, signal processing and positioning algorithms as detailed above.

The skilled person will understand that any combination of features is possible within the scope of the invention, as claimed.

**Claims**

1. A device comprising
   a communications interface configured to receive encrypted GNSS spreading signals from a plurality of satellites and configured to receive a replica spreading code from an external source; and
   a processor (7) for calculating a position based on the encrypted GNSS signal and the replica spreading code,
   **characterised in that**:

   the replica spreading code is a replica of multiple spreading codes for a plurality of satellites overlaid together, and the processor (7) is configured to detect a plurality of observed satellite spreading codes present in both the encrypted GNSS spreading signal and the replica of multiple spreading codes to produce a plurality of correlation matches and is configured to identify a satellite associated with each correlation match using navigation information.

2. A device as claimed in Claim 1, wherein the navigation information relates to a plurality of potential satellites each having a satellite identifier, and the processor (7) is configured to calculate a pseudorange with each potential satellite for each correlation match and allocate a satellite identifier to the satellite associated with each correlation match using the pseudorange and navigation information.

3. A device as claimed in Claim 2, wherein the processor (7) is configured to perform a position computation using the pseudorange and navigation information for a plurality of mappings of satellite identifier to each correlation match.

4. A device as claimed in Claim 3, wherein the processor (7) is configured to omit a potential mapping of satellite identifier to correlation match.

5. A device as claimed in Claim 1, wherein the navigation information relates to a plurality of potential satellites each having a satellite identifier, wherein the processor (7) is configured to:

   calculate an expected observable for each satellite in the plurality of potential satellites using the navigation information,
   populate a set of expected relative values, wherein each expected relative value is the difference between the expected observables for each pair of satellites in the plurality of potential satellites,
   measure an observable for each correlation match in the plurality of observed correlation matches,
   populate a second set of observed relative values, wherein each observed relative value is the difference between the measured observables for each pair of satellites in the plurality of correlation matches, and
   allocate a satellite identifier to the satellite associated with each correlation match based on the correspondence between an expected relative value and the observed relative value.

6. A device as claimed in Claim 5, wherein the processor (7) is configured to allocate a satellite identifier with each correlation match based on the correspondence between an expected relative value and the observed relative value if a criterion is met, and
wherein the criterion is met if a first difference between the expected relative value and the observed relative value is below a first predetermined threshold.

7. A device as claimed in any one of the preceding claims, being a GNSS device (1).

8. A device as claimed in any one of the preceding claims, being connectable to a host.

9. A method of identifying a satellite associated with a correlation match, the correlation match produced when a satellite spreading code is present in both an encrypted GNSS spreading signal and a replica of multiple GNSS spreading codes for a plurality of satellites overlaid together, the method comprising the steps of:

receiving navigation information relating to a plurality of potential satellites, wherein each potential satellite in the plurality of potential satellites includes a satellite identifier;
calculating a pseudorange with each potential satellite for each correlation match; and
allocating the satellite identifier to the satellite associated with each correlation match based on the pseudorange and navigation information.

10. A method as claimed in Claim 9, wherein the step of allocating the satellite identifier includes the step of performing a position computation using the pseudorange and navigation information for a plurality of potential mappings of satellite identifier to each correlation match.

11. A method as claimed in Claim 10, wherein the position computation is a least-squares computation and a best-fit solution is used to allocate the satellite identifiers to each satellite associated with each correlation match.

12. A method as claimed in either Claim 10 or Claim 11, further comprising the step of omitting a potential mapping of satellite identifier to correlation match.

13. A method of identifying a satellite associated with a correlation match, the correlation match produced when a satellite spreading code is present in both an encrypted GNSS spreading signal and a replica of multiple GNSS spreading codes for a plurality of satellites overlaid together, the method comprising the steps of:

receiving navigation information relating to a plurality of potential satellites from an external source, wherein each potential satellite in the plurality of potential satellites includes a satellite identifier;
calculating an expected observable for each satellite in the plurality of potential satellites using the navigation information;
populating a set of expected relative values, wherein each expected relative value is the difference between the expected observables for each pair of satellites in the plurality of potential satellites;
measuring an observable for each correlation match in a plurality of correlation matches;
populating a second set of observed relative values, wherein each observed relative value is the difference between the measured observables for each pair of satellites in the plurality of correlation matches; and
allocating a satellite identifier to the satellite associated with each correlation match based on the correspondence between an expected relative value and the observed relative value.

14. A computer program embodied on a computer readable medium, containing instructions which when executed on a computer are configured to perform the methods as claimed in any one of Claims 9 to 13.

**Patentansprüche**

1. Vorrichtung mit
einer Kommunikationsschnittstelle, die zum Empfangen von verschlüsselten GNSS-Spreizsignalen von mehreren Satelliten ausgebildet ist und zum Empfangen eines Replika-Spreizcodes von einer externen Quelle ausgebildet ist; und
einem Prozessor (7) zum Berechnen einer Position basierend auf dem verschlüsselten GNSS-Signal und dem Replika-Spreizcode,

**dadurch gekennzeichnet, dass**:

der Replika-Spreizcode eine Replika mehrerer Spreizcodes für mehrere Satelliten, die einander überlagert sind, ist und der Prozessor (7) zum Detektieren mehrerer beobachteter Satellitenspreizcodes, die in sowohl dem verschlüsselten GNSS-Spreizsignal als auch der Replika mehrerer Spreizcodes vorhanden sind, zum Erzeugen mehrerer Korrelationsübereinstimmungen ausgebildet ist und zum Identifizieren eines Satelliten, der einer jeweiligen Korrelationsübereinstimmung zugeordnet ist, unter Verwendung von Navigationsinformation ausgebildet ist.

2. Vorrichtung nach Anspruch 1, bei der die Navigationsinformation mehrere potentielle Satelliten, die jeweils einen Satellitenidentifizierer aufweisen, betrifft und der Prozessor (7) zum Berechnen eines Pseudobereichs mit einem jeweiligen potentiellen Satelliten für jede Korrelationsübereinstimmung und Zuweisen eines Satellitenidentifizierers zu dem Satelliten, der einer jeweiligen Korrelationsübereinstimmung zugeordnet ist, unter Verwendung des Pseudobereichs und der Navigationsinformation ausgebildet ist.

3. Vorrichtung nach Anspruch 2, bei der der Prozessor (7) zum Durchführen einer Positionsberechnung unter Verwendung des Pseudobereichs und der Navigationsinformation für mehrere Abbildungen eines Satellitenidentifizierers auf eine jeweilige Korrelationsübereinstimmung ausgebildet ist.

4. Vorrichtung nach Anspruch 3, bei der der Prozessor (7) zum Übergehen einer potentiellen Abbildung eines Satellitenidentifizierers auf eine Korrelationsübereinstimmung ausgebildet ist.

5. Vorrichtung nach Anspruch 1, bei der die Navigationsinformation mehrere potentielle Satelliten, die jeweils einen Satellitenidentifizierer aufweisen, betrifft, wobei der Prozessor (7) ausgebildet ist zum:

Berechnen einer erwarteten Observablen für jeden Satelliten der mehreren potentiellen Satelliten unter Verwendung der Navigationsinformation,
Bevölkern eines Satzes von erwarteten Relativwerten, wobei jeder erwartete Relativwert die Differenz zwischen den erwarteten Observablen für ein jeweiliges Paar von Satelliten der mehreren potentiellen Satelliten ist,
Messen einer Observablen für jede Korrelationsübereinstimmung der mehreren beobachteten Korrelationsübereinstimmungen,
Bevölkern eines zweiten Satzes von beobachteten Relativwerten, wobei jeder beobachtete Relativwert die Differenz zwischen den gemessenen Observablen für ein jeweiliges Paar von Satelliten der mehreren Korrelationsübereinstimmungen ist, und
Zuweisen eines Satellitenidentifizierers zu dem Satelliten, der einer jeweiligen Korrelationsübereinstimmung zugewiesen ist, basierend auf der Korrespondenz zwischen einem erwarteten Relativwert und dem beobachteten Relativwert.

6. Vorrichtung nach Anspruch 5, bei der der Prozessor (7) zum Zuweisen eines Satellitenidentifizierers zu einer jeweiligen Korrelationsübereinstimmung basierend auf der Entsprechung zwischen einem erwarteten Relativwert und dem beobachteten Relativwert, wenn ein Kriterium erfüllt ist, ausgebildet ist und
bei der das Kriterium erfüllt ist, wenn eine erste Differenz zwischen dem erwarteten Relativwert und dem beobachteten Relativwert eine erste vorbestimmte Schwelle unterschreitet.

7. Vorrichtung nach einem der vorhergehenden Ansprüche, die eine GNSS-Vorrichtung (1) ist.

8. Vorrichtung nach einem der vorhergehenden Ansprüche, die mit einem Host verbindbar ist.

9. Verfahren zum Identifizieren eines Satelliten, der einer Korrelationsübereinstimmung zugeordnet ist, wobei die Korrelationsübereinstimmung erzeugt wird, wenn ein Satellitenspreizcode in sowohl einem verschlüsselten GNSS-Spreizsignal als auch einer Replika mehrerer GNSS-Spreizcodes für mehrere Satelliten, die einander überlagert sind, vorhanden ist, mit folgenden Schritten:

Empfangen von Navigationsinformation in Bezug auf mehrere potentielle Satelliten, wobei jeder potentielle Satellit der mehreren potentiellen Satelliten einen Satellitenidentifizierer aufweist;
Berechnen eines Pseudobereichs mit einem jeweiligen potentiellen Satelliten für jede Korrelationsübereinstimmung; und
Zuweisen des Satellitenidentifizierers zu dem Satelliten, der der jeweiligen Korrelationsübereinstimmung zugeordnet ist, basierend auf dem Pseudobereich und Navigationsinformation.

10. Verfahren nach Anspruch 9, bei dem das Zuweisen des Satellitenidentifizierers ein Durchführen einer Positionsberechnung unter Verwendung des Pseudobereichs und der Navigationsinformation für mehrere potentielle Abbildungen eines Satellitenidentifizierers auf eine jeweilige Korrelationsübereinstimmung beinhaltet.

11. Verfahren nach Anspruch 10, bei dem die Positionsberechnung eine Fehlerquadratberechnung ist und eine Best-Fit-Lösung zum Zuweisen der Satellitenidentifizierer zu jeweiligen Satelliten, die jeweiligen Korrelationsübereinstimmungen zugeordnet sind, verwendet wird.

12. Verfahren nach Anspruch 10 oder 11, ferner mit Übergehen einer potentiellen Abbildung eines Satellitenidentifizierers auf eine Korrelationsübereinstimmung.

13. Verfahren zum Identifizieren eines Satelliten, der einer Korrelationsübereinstimmung zugeordnet ist, wobei die Korrelationsübereinstimmung erzeugt wird, wenn ein Satellitenspreizcode in sowohl einem verschlüsselten GNSS-Spreizsignal als auch einer Replika mehrerer GNSS-Spreizcodes für mehrere Satelliten, die einander überlagert sind, vorhanden ist, mit folgenden Schritten:

Empfangen von Navigationsinformation in Bezug auf mehrere potentielle Satelliten von einer externen Quelle, wobei jeder potentielle Satellit der mehreren potentiellen Satelliten einen Satellitenidentifizierer aufweist;
Berechnen einer erwarteten Observablen für jeden Satelliten der mehreren potentiellen Satelliten unter Verwendung der Navigationsinformation;
Bevölkern eines Satzes von erwarteten Relativwerten, wobei jeder erwartete Relativwert die Differenz zwischen den erwarteten Observablen für ein jeweiliges Paar von Satelliten der mehreren potentiellen Satelliten ist;
Messen einer Observablen für jede Korrelationsübereinstimmung von mehreren Korrelationsübereinstimmungen;
Bevölkern eines zweiten Satzes von beobachteten Relativwerten, wobei jeder beobachtete Relativwert die Differenz zwischen den gemessenen Observablen für ein jeweiliges Paar von Satelliten der mehreren Korrelationsübereinstimmungen ist; und
Zuweisen eines Satellitenidentifizierers zu dem Satelliten, der einer jeweiligen Korrelationsübereinstimmung zugeordnet ist, basierend auf der Entsprechung zwischen einem erwarteten Relativwert und dem beobachteten Relativwert.

14. Computerprogramm auf einem computerlesbaren Medium, das Anweisungen enthält, die bei einer Ausführung auf einem Computer bewirken, dass das Verfahren nach einem der Ansprüche 9 bis 13 durchgeführt wird.

**Revendications**

1. Dispositif comprenant

- une interface de communications configurée pour recevoir des signaux d'étalement GNSS chiffrés provenant d'une pluralité de satellites et configurée pour recevoir un code d'étalement réplique provenant d'une source extérieure et
- un processeur (7) permettant de calculer une position en se fondant sur le signal GNSS chiffré et le code d'étalement réplique,

**caractérisé en ce que** :

le code d'étalement réplique est une réplique de multiples codes d'étalement pour une pluralité de satellites superposés les uns aux autres, et le processeur (7) est configuré pour détecter une pluralité de codes d'étalement de satellite observés qui sont présents à la fois dans le signal d'étalement GNSS chiffré et la réplique de multiples codes d'étalement afin d'obtenir une pluralité de mises en correspondance par corrélation et est configuré pour identifier un satellite associé à chaque mise en correspondance par corrélation en utilisant des informations de navigation.

2. Dispositif tel que revendiqué dans la revendication 1, dans lequel les informations de navigation concernent une pluralité de satellites potentiels, chacun ayant un identifiant de satellite, et dans lequel le processeur (7) est configuré pour calculer une pseudodistance avec chaque satellite potentiel pour chaque mise en correspondance par corrélation et attribuer un identifiant de satellite au satellite associé à chaque mise en correspondance par corrélation en utilisant la pseudodistance et les informations de navigation.

3. Dispositif tel que revendiqué dans la revendication 2, dans lequel le processeur (7) est configuré pour effectuer un calcul de position en utilisant la pseudodistance et les informations de navigation pour une pluralité de mappages d'identifiant de satellite par rapport à chaque mise en correspondance par corrélation.

4. Dispositif tel que revendiqué dans la revendication 3, dans lequel le processeur (7) est configuré pour omettre un mappage potentiel d'identifiant de satellite par rapport à la mise en correspondance par corrélation.

5. Dispositif tel que revendiqué dans la revendication 1, dans lequel les informations de navigation concernent une pluralité de satellites potentiels, chacun ayant un identifiant de satellite, dans lequel le processeur (7) est configuré pour :

   - calculer un observable attendu pour chaque satellite de la pluralité de satellites potentiels en utilisant les informations de navigation,
   - alimenter un ensemble de valeurs relatives attendues, dans lequel chaque valeur relative attendue est la différence entre les observables attendus pour chaque paire de satellites de la pluralité de satellites potentiels,
   - mesurer un observable pour chaque mise en correspondance par corrélation dans la pluralité de mises en correspondance par corrélation observées,
   - alimenter un second ensemble de valeurs relatives observées, dans lequel chaque valeur relative observée est la différence entre les observables mesurés pour chaque paire de satellites dans la pluralité de mises en correspondance par corrélation et

   attribuer un identifiant de satellite au satellite associé à chaque mise en correspondance par corrélation en se fondant sur la correspondance entre une valeur relative attendue et la valeur relative observée.

6. Dispositif tel que revendiqué dans la revendication 5, dans lequel le processeur (7) est configuré pour attribuer un identifiant de satellite à chaque mise en correspondance par corrélation en se fondant sur la correspondance entre une valeur relative attendue et la valeur relative observée si un critère est satisfait, et dans lequel le critère est satisfait si une première différence entre la valeur relative attendue et la valeur relative observée est inférieure à un premier seuil prédéterminé.

7. Dispositif tel que revendiqué dans l'une quelconque des revendications précédentes, ledit dispositif étant un dispositif GNSS (1).

8. Dispositif tel que revendiqué dans l'une quelconque des revendications précédentes, pouvant être connecté à un hôte.

9. Procédé d'identification d'un satellite associé à une mise en correspondance par corrélation, ladite mise en correspondance par corrélation étant obtenue lorsqu'un code d'étalement de satellite est présent à la fois dans un signal d'étalement GNSS chiffré et une réplique des multiples codes d'étalement GNSS pour une pluralité de satellites superposés les uns aux autres, ledit procédé comprenant les étapes consistant à :

   - recevoir des informations de navigation qui concernent une pluralité de satellites potentiels, dans lequel chaque satellite potentiel dans la pluralité de satellites potentiels inclut un identifiant de satellite,
   - calculer une pseudodistance avec chaque satellite potentiel pour chaque mise en correspondance par corrélation et
   - attribuer un identifiant de satellite au satellite associé à chaque mise en correspondance par corrélation en se fondant sur la pseudodistance et les informations de navigation.

10. Procédé tel que revendiqué dans la revendication 9, dans lequel l'étape d'attribution de l'identifiant de satellite inclut l'étape d'exécution d'un calcul de position en utilisant la pseudodistance et les informations de navigation pour une pluralité de mappages potentiels d'identifiant de satellite par rapport à chaque mise en correspondance par corrélation.

11. Procédé tel que revendiqué dans la revendication 10, dans lequel le calcul de position est un calcul par la méthode des moindres carrés et la solution la mieux adaptée est utilisée pour attribuer les identifiants de satellite à chaque satellite associé à chaque mise en correspondance par corrélation.

**12.** Procédé tel que revendiqué soit dans la revendication 10 soit dans la revendication 11, comprenant en outre l'étape consistant à omettre un mappage potentiel d'identifiant de satellite par rapport à une mise en correspondance par corrélation.

**13.** Procédé d'identification d'un satellite associé à une mise en correspondance par corrélation, ladite mise en correspondance par corrélation étant obtenue lorsqu'un code d'étalement de satellite est présent à la fois dans un signal d'étalement GNSS chiffré et une réplique de multiples codes d'étalement GNSS pour une pluralité de satellites superposés les uns aux autres, ledit procédé comprenant les étapes consistant à :

- recevoir des informations de navigation qui concernent une pluralité de satellites potentiels provenant d'une source extérieure, dans lequel chaque satellite potentiel dans la pluralité de satellites potentiels inclut un identifiant de satellite,
- calculer un observable attendu pour chaque satellite de la pluralité de satellites potentiels en utilisant les informations de navigation,
- alimenter un ensemble de valeurs relatives attendues, dans lequel chaque valeur relative attendue est la différence entre les observables attendus pour chaque paire de satellites de la pluralité de satellites potentiels,
- mesurer un observable pour chaque mise en correspondance par corrélation dans une pluralité de mises en correspondance par corrélation,
- alimenter un second ensemble de valeurs relatives observées, dans lequel chaque valeur relative observée est la différence entre les observables mesurés pour chaque paire de satellites dans la pluralité de mises en correspondance par corrélation et
- attribuer un identifiant de satellite au satellite associé à chaque mise en correspondance par corrélation en se fondant sur la correspondance entre une valeur relative attendue et la valeur relative observée.

**14.** Programme informatique intégré dans un support lisible par ordinateur, contenant des instructions qui, lorsqu'elles sont exécutées, sont configurées pour mettre en oeuvre les procédés tels que revendiqués dans l'une quelconque des revendications 9 à 13.

Satellite

Encrypted GNSS
spreading signal

3    5
1

7

Assistance
Message    Antenna

External Source

**Figure 1**

**Figure 2**

Receive navigation information relating to a plurality of potential satellites

Calculate a pseudorange for each potential satellite in a plurality of potential satellites

Perform position calculation using pseudorange and navigation information for a plurality of potential mappings of satellite identifier to correlation match

Allocate the satellite identifier to the satellite associated with the correlation match, based on best-fit solution

**Figure 3**

Receive navigation information relating to a
plurality of potential satellites

Calculate an expected observable for each
satellite in the plurality of potential satellites
using the navigation information

Populate a set of expected relative values

Calculate an observable for each observed
satellite spreading signal

Populate a second set of observed relative
values

Allocate a satellite identifier to a satellite
associated with a correlation match based on
the correspondence between the expected
and observed values

Figure 4

**EP 2 799 908 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5825887 A

- US 6031488 A